# EUROPÄISCHE PATENTANMELDUNG

(11) **EP 0 774 744 A2**
(43) Veröffentlichungstag der Anmeldung: **21.05.1997**
(21) Anmeldenummer: 96117783.9
(22) Anmeldetag: 06.11.1996
(51) Int. Cl.: G09G 1/16, G06F 3/14

(54) **Personalcomputer-System mit der Möglichkeit einer wahlweisen Bildausgabe an einem Monitor oder an einem Fernsehgerät**

(30) Priorität: 09.11.1995 DE 19541871
(71) Anmelder: Siemens Nixdorf Informationssysteme AG, 33106 Paderborn (DE)
(72) Erfinder: Pilz, Erich, 86343 Königsbrunn (DE)
(74) Vertreter: Fuchs, Franz-Josef, Dr.-Ing.

(57) **Zusammenfassung**

Es wird ein Personalcomputer-System mit der Möglichkeit einer wahlweisen Bildausgabe an einem Monitor (M) oder an einem Fernsehgerät (TV) mit monitorähnlicher Bildqualität angegeben, dessen Personalcomputer (PC) einen Grafikchip (GC) aufweist, der in der Weise programmiert ist, daß er abhängig von entweder der Fernsehausgabe oder der Monitorausgabe zugeordneten Initialisierungsanweisungen beim Booten des Personalcomputers (PC) nach dessen Einschalten die für eine Bilddarstellung benötigten Signale für alle Auflösungen und Video-Modis entsprechend entweder mit fernsehgerätgerechter oder mit monitorgerechter Bildwechsel- und Zeilenfrequenz unter Einbeziehung eines jeweils entsprechend zugehörigen Interlaced- oder Noninterlaced-Modus über die VGA-Schnittstelle (VGA) des Personalcomputers (PC) ausgibt.

## Beschreibung

Die Erfindung betrifft ein Personalcomputer-System mit der Möglichkeit einer wahlweisen Bildausgabe an einem Monitor oder an einem Fernsehgerät mit monitorähnlicher Bildqualität gemäß den Merkmalen des Oberbegriffs des Anspruchs 1.

In der Regel wird zur Bildausgabe bei einem Personalcomputer-System ein Monitor an den Personalcomputer des Personalcomputer-Systems angeschlossen. Dieser Monitor ist so ausgelegt, daß er die wesentlich höheren Auflösungen, Bildwechselfrequenzen und Horizontalfrequenzen im PC-Betrieb verarbeiten kann. Fernsehgeräte sind dagegen nicht in der Lage, diese Signale zu verarbeiten.

Eine Vergleichstabelle verdeutlicht diesen Sachverhalt.

| | TV | 100Hz TV | Massen-Monitor | CAD-Monitor |
|---|---|---|---|---|
| A | 50Hz interlaced (25 Vollbilder) | 50Hz interlaced (25 Vollbilder) | 60-100Hz | 60-100Hz |
| B | 15,6kHZ | 15,6kHZ(Eingang) (intern 32kHz) | 31-64kHz | 64-110kHz |
| C | 768x575 | 768x575 | von 640-480 bis 1024x768 | von 1024x768 bis 1600x1200 |
| D | 320x240 | 320x240 | - | - |
| E | ca. 520x400 | ca. 5200x400 | - | - |
| F | 768x575 | 768x575 | von 640x480 bis 1024x768 | von 1024x768 bis 1600x1200 |
| G | 0,4-0,6 | 0,4-0,6 | 0,28-0,31 | 0,26-0,28 |

Die einzelnen mit Großbuchstaben bezeichneten Zeilen der obigen Vergleichstabelle geben folgenden Sachverhalt an:
- Zeile A:: Bildwechselfrequenz (Vertikalfrequenz)
- Zeile B:: Zeilenfrequenz (horizontale Ablenkfrequenz)
- Zeile C:: Auflösung Monitor
- Zeile D:: Auflösung Videoeingang
- Zeile E:: Auflösung S-VHS-Eingang
- Zeile F:: Auflösung RGB-Eingang
- Zeile G:: Lochmaske

Beim Fernsehgerät müssen die gezeigten Filme sehr brillant (hell) dargestellt werden. Der Abstand vom Betrachter zum Fernsehgerät ist dabei meist größer als 1 m. Das Fernsehgerät arbeitet zudem im Interlaced-Betrieb.

Beim Monitor muß das Bild scharf und flimmerfrei sein. Der Abstand vom Betrachter zum Monitor ist im Gegensatz zu einem Fernsehgerät meist kleiner als 1 m.

Diese Unterschiede zwischen einem Fernsehgerät und einem Monitor sprechen nicht für die Verwendung eines Fernsehgerätes in einem Personalcomputer-System zur Bildausgabe.

Spiele-Computer schließen ihre Geräte zwar über den Antenneneingang am Fernsehgerät an. Die Bilddarstellung ist über diesen Weg aber am schlechtesten. Das Computerbild wird auf eine Frequenz im TV-Bereich (Kanal 30-40, entspricht ca. 600 MHz) umgewandelt und als empfangbarer Sender ausgegeben. Die Bildqualität ist sehr schlecht, da die Farbinformation nur eine geringe Bandbreite hat und durch das Hoch- und Zurücktransformieren Verluste und Bildveränderungen verursacht sind.

Es gibt auch hochwertige VGA auf TV-Konverter. Dies sind aber sehr teure Geräte. Sie speichern ein Videobild auf einem digitalen Bild-Speicher zwischen, wandeln das Noninterlaced- in ein Interlaced-Signal um, modulieren es zu einem FBAS (Video)-Signal und geben es dann an das Fernsehgerät weiter. Manche dieser Geräte haben auch noch einen Antennenausgang. Die Bildausgabe ist durch eine reduzierte Farbinformation aber nicht akzeptabel.

Seit einiger Zeit werden die Fernsehgeräte mit einem Scart-Eingang ausgestattet. Dort ist ein RGB-Eingang beschaltet. Für die höchste darstellbare Bildschärfe des Fernsehgerätes ist nur dieser RGB-Eingang geeignet.

Der Monitor wird über seinen RGB-Eingang an eine VGA-Schnittstelle des Personalcomputers angeschlossen. Dort wird der Monitor im noninterlaced Mode mit mindestens 31 kHz Zeilenfrequenz und mit mindestens 60 Hz Bildwechselfrequenz (siehe Vergleichstabelle) betrieben. Diese Werte erreicht das Fernsehgerät nicht. Deshalb wird das Fernsehgerät nicht an einem Personalcomputer angeschlossen.

Aufgabe der Erfindung ist es, ein Personalcomputer-System mit der Möglichkeit einer wahlweisen Bildausgabe an einem Monitor oder an einem Fernsehgerät mit monitorähnlicher Bildqualität anzugeben.

Diese Aufgabe wird durch die im kennzeichnenden Teil des Anspruchs 1 angegebenen Merkmale gelöst.

Danach ist der Grafikchip des Personalcomputers in der Weise umprogrammiert, daß er alle Auflösungen und Video-Modis sowohl in fernsehgerätgerechter als auch in monitorgerechter Norm ausgeben kann. In welcher Norm die Ausgabe erfolgen soll, wird in der Initialisierungsphase des Personalcomputers festgelegt. Die Initialisierung kann dabei entweder über ein internes Festplattenlaufwerk oder über ein für externe Speichermedien vorgesehenes Laufwerk erfolgen, in das eine entsprechende Bootdiskette eingelegt ist. Mit diesen Bootdisketten kann die Bildausgabe auf Wunsch auch umgestellt werden.

Vorteilhafte Ausgestaltungen der Erfindung sind Gegenstand von Unteransprüchen.

Danach ist ein Adaptergerät vorgesehen, das sowohl eine VGA-Buchse für den Anschluß eines Monitors als auch eine Scart-Buchse für den Anschluß eines Fernsehgerätes aufweist. Somit muß das Adaptergerät nicht abgezogen werden, wenn anstelle des Fernsehgerätes ein Monitor angeschlossen und auf Monitorausgabe umgestellt wird.

Mit einer Icon-Auswahlsteuerung kann die Umschaltung von Fernsehgerät- auf Monitorausgabe und umgekehrt in sehr einfacher Weise auch nachträglich vorgenommen werden.

Nachfolgend wird ein Ausführungsbeispiel der Erfindung anhand einer Zeichnung näher erläutert. Darin zeigen
- Figur 1: ein Personalcomputer-System gemäß der Erfindung in einem Übersichtsschaltbild und
- Figur 2: ein Adaptergerät des Personalcomputer-Systems gemäß der Figur 1 mit einer Prinzipdarstellung des inneren Aufbaus.

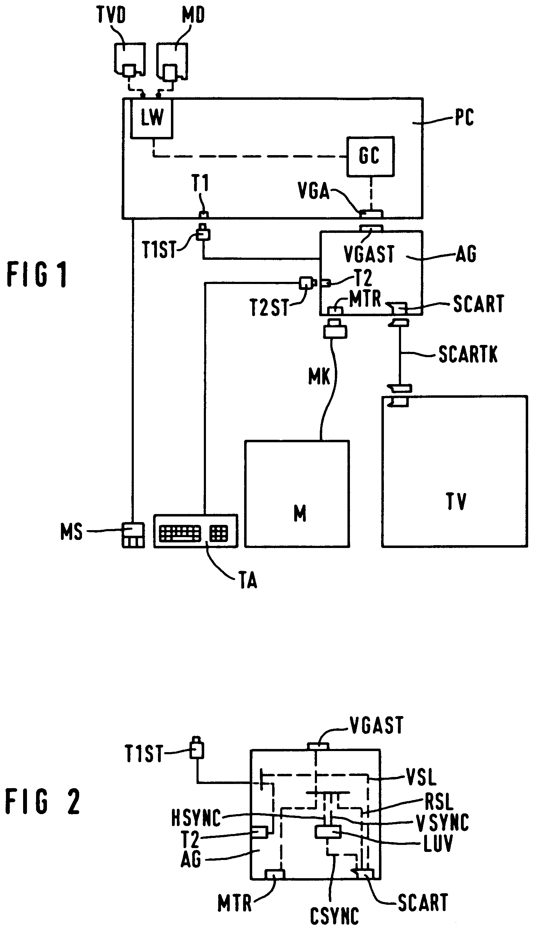

Das in der Figur 1 und in der Figur 2 in einem Detail näher dargestellte Personalcomputer-System mit der Möglichkeit einer wahlweisen Bildausgabe an einem Monitor oder an einem Fernsehgerät mit monitorähnlicher Bildqualität weist einen Personalcomputer PC, einen Monitor M oder ein Fernsehgerät TV, eine Tastatur TA und zur Steuerung des Cursors auf dem Bildschirm eine Maus MS auf.

Der Personalcomputer PC als Grundgerät des Personalcomputer-Systems hat eine VGA-Schnittstelle VGA, an die in einer Grundausstattung der Monitor M angeschlossen ist. Der Personalcomputer PC hat ferner eine Anschlußmöglichkeit T1 für den Anschluß der Tastatur TA. Ein Pin der Anschlußmöglichkeit T1 für die Tastatur TA ist mit einer Versorgungsspannung für die Tastatur belegt. Der Personalcomputer PC weist weiter ein Laufwerk LW auf, in das externe Speichermedien, wie zum Beispiel Disketten, eingelegt werden können.

Zum Personalcomputer-System gemäß der Figur 1 gehören zwei spezielle Disketten, die zum Booten des Systems dienen. Eine erste Diskette TVD stellt die Initialisierungsanweisungen zur Verfügung, die benötigt werden, um das Personalcomputer-System mit einem Fernsehgerät TV betreiben zu können. Eine zweite Diskette MD stellt die Initialisierungsanweisungen zur Verfügung, die benötigt werden, um das Personalcomputer-System mit einem Monitor betreiben zu können. Die Disketten TVD, MD können wahlweise und bei Bedarf in das Laufwerk LW eingelegt werden, um das System zu booten.

Der Personalcomputer PC weist einen Grafikchip GC auf, der in der Weise programmiert ist, daß er abhängig von entweder der Fernsehausgabe oder der Monitorausgabe zugeordneten Initialisierungsanweisungen beim Booten des Personalcomputers PC nach dessen Einschalten die für eine Bilddarstellung benötigten Signale für alle Auflösungen und Video-Modis entsprechend entweder mit fernsehgerätgerechter oder mit monitorgerechter Bildwechsel- und Zeilenfrequenz über die VGA-Schnittstelle VGA des Personalcomputers PC ausgibt. Die Ausgabe erfolgt dabei unter Einbeziehung eines jeweils entsprechend zugehörigen Interlaced- oder Noninterlaced-Modus. Zum Beispiel beträgt bei einem Fernsehgerätbetrieb im interlaced Mode die Zeilenfrequenz 15,6 kHz und die Bildwechselfrequenz 50 Hz.

Zum Anschließen eines Fernsehgerätes TV an die VGA-Schnittstelle VGA des Personalcomputers PC ist an die VGA-Schnittstelle VGA des Personalcomputers PC mit einem entsprechenden VGA-Stecker VGAST ein Adaptergerät AG angeschlossen. Das Adaptergerät kann dabei direkt oder über eine kurze Verbindungsleitung an die VGA-Schnittstelle VGA angeschlossen sein.

Das Adaptergerät AG weist eine mit dem VGA-Stecker VGAST verbundene Fernsehgerätanschlußmöglichkeit SCART auf, an die mit einem Fernsehgerätanschluß-Kabel SCARTK das Fernsehgerät TV anschließbar ist. Das Adaptergerät AG weist ferner eine ebenfalls mit dem VGA-Stecker VGAST verbundene Monitoranschlußmöglichkeit MTR auf, über die mit einem Monitor-Kabel MK der Monitor M anschließbar ist.

Eine Tastaturverbindungsleitung des Adaptergerätes AG, an deren Ende ein Tastaturstecker T1ST angeordnet ist, ist mit der am Personalcomputer PC vorgesehenen Anschlußmöglichkeit T1 für die Tastatur TA verbunden. Dafür ist in eine entsprechende Anschlußmöglichkeit T2 am Adaptergerät AG für den Anschluß der Tastatur TA die Tastatur TA mit einem zugehörigen Tastaturstecker T2ST eingesteckt.

Die Tastaturverbindungsleitung ist innerhalb des Adaptergerätes AG durchgeschaltet, so daß die Tastatur TA ihre angestammte Funktion ausüben kann.

Von den Leitungen der Tastaturschnittstelle ist diejenige Leitung, die die Versorgungsspannung für die Tastatur TA führt, als Versorgungsspannungsleitung VSL an die Anschlußmöglichkeit SCART für das Fernsehgerät TV des Adaptergerätes AG geführt. Bei der Versorgungsspannung für die Tastatur TA handelt es sich beispielsweise um eine +5V-Spannung, mit der die Hardwareschaltung im Adaptergerät AG versorgt und ein RGB-Eingang im Fernsehgerät TV, der auch an der Fernsehgerätanschlußmöglichkeit SCART beschaltet ist, aktiviert wird.

In dem Adaptergerät AG ist eine Logikschaltung LUV vorgesehen, die zur Zusammenführung an der Fernsehgerätanschlußmöglichkeit SCART der von der VGA-Schnittstelle VGA getrennt zugeführten Signale für eine Horizontal- und eine Vertikalsynchronisation HSYNC, VSYNC zu einem gemeinsamen Kompositionssignal CSYNC dient. Gleichzeitig wird das Kompositionssignal CSYNC in der Amplitude auf beispielsweise 500 mV reduziert.

Übrige, nicht explizit angesprochene Signale der VGA-Schnittstelle VGA sind zusammengefaßt als Restsignalleitungen RSL an die Fernsehgerätanschlußmöglichkeit SCART geführt.

Die vorbeschriebene innere Struktur des Adaptergerätes AG ist in der Figur 2 näher dargestellt.

In einer vorteilhaften Ausgestaltung des Personalcomputer-Systems ist die Fernsehgerätanschlußmöglichkeit SCART des Adaptergerätes AG als Scart-Schnittstelle ausgebildet, an der, wie schon erwähnt, der RGB-Eingang des Fernsehgerätes TV beschaltet ist. Zur Aktivierung des RGB-Einganges ist Pin 18 der Scart-Schnittstelle auf die +5V Versorgungsspannung gelegt, die dort als RGB-Schaltspannung wirkt.

In einer weiteren vorteilhaften Ausgestaltung des Personalcomputer-Systems gemäß der Figur 1 wird beim Betreiben des Fernsehgerätes TV eine Farbanpassung vorgenommen. Beispielsweise kann in einem Windows- und WIN95-Betrieb ein grauer statt ein weißer Hintergrund eingestellt werden. Dies bewirkt, daß das Bild mit weniger Kontrast auf dem Bildschirm des Fernsehgerätes TV dargestellt wird. Damit ist das Lesen von Text für das Auge angenehmer. Ein helles Flimmern (50 Hz) wird reduziert. Die Lochmaske der Bildröhre wird nicht so stark aufgeheizt, was weniger Farbverfälschungen zur Folge hat. Der Fokus in den Randbereichen der Bildröhre bleibt außerdem gut.

Bei einer Erstinstallation des Personalcomputer-Systems wird beispielsweise die Festplatte des Personalcomputers PC automatisch vom Bitimage eingerichtet und die Software für die eingebauten Komponenten freigegeben und richtig initialisiert. Nach kurzer Zeit ist der Personalcomputer PC fertig und betriebsbereit. Dabei wird grundsätzlich ein angeschlossener Standardmonitor angenommen.

Sollte ein Fernsehgerät TV angeschlossen werden, ist vor dem erstmaligen Einschalten des Personalcomputers PC die für fernsehgerätgerechten Betrieb vorgesehene erste Diskette TVD in das Laufwerk LW des Personalcomputers PC einzulegen und von dieser aus zu booten. Die Boot-Diskette erkennt und initialisiert den Grafik-Controller auf dem Motherboard des Personalcomputers PC auf die Fernsehfrequenzen und startet anschließend die Erstinstalation mit Bildausgabe für das Fernsehgerät TV.

Nach dem nächsten Einschalten arbeitet der Personalcomputer PC immer mit dem Fernsehgerät TV als Bildausgabe. Es muß keine Diskette mehr eingelegt werden. Die TV-Initialisierung wird bei jedem Einschalten automatisch durchgeführt.

Soll zu einem späteren Zeitpunkt dann ein PC-Monitor angeschlossen werden, kann die Möglichkeit realisiert sein, in einer Bilddarstellung beispielsweise in WIN95 ein Auswahl-Icon mit dem Cursor zu aktivieren, woraufhin ausgewählt werden kann, welches Bildwiedergabegerät nachfolgend gesteuert werden soll. Im vorliegenden Beispiel wird der Monitor M ausgewählt. Nach der Auswahl bringt sich beispielsweise der Personalcomputer PC selbst in einen Zustand, in dem ein Wechsel des Bildwiedergabegerätes möglich ist. Nach dem Wechsel des Bildwiedergabegerätes und beispielsweise einem erneuten Einschalten des Personalcomputers PC wird dieser entsprechend gebootet, so daß jetzt der Monitor M mit den richtigen Signalen betrieben wird.

Soll wieder auf die Bildausgabe auf einem Fernsehgerät TV zurückgewechselt werden, wiederholt sich die Prozedur: Im Auswahl-Icon wird die Ausgabe ausgewählt, der Personalcomputer PC in einen Grundzustand gesteuert, das Fernsehgerät angeschlossen und der Personalcomputer PC wieder eingeschaltet.

Soll eine Wechsel des Bildwiedergabegerätes ohne Auswahl über das Auswahl-Icon erfolgen, ist dies möglich, indem von der entsprechenden Diskette TVD, MD gebootet wird. Die jeweilige Einstellung bleibt dann wieder nach dem Abschalten des Personalcomputers PC erhalten.

## Patentansprüche

1. Personalcomputer-System mit der Möglichkeit einer wahlweisen Bildausgabe an einem Monitor oder an einem Fernsehgerät mit monitorähnlicher Bildqualität, mit einem für den Anschluß eines Monitors (M) eine VGA-Schnittstelle, für den Anschluß einer Tastatur eine Anschlußmöglichkeit mit einem eine Versorgungsspannung führenden Pin und für die Zuführung von externen Speichermedien ein Laufwerk aufweisenden Personalcomputer als Grundgerät sowie mit einer Tastatur und einem Gerät zur Steuerung eines Cursors auf dem Bildschirm, **dadurch gekennzeichnet,** daß der Personalcomputer (PC) einen Grafikchip (GC) aufweist, der in der Weise programmiert ist, daß er abhängig von entweder der Fernsehausgabe oder der Monitorausgabe zugeordneten Initialisierungsanweisungen beim Booten des Personalcomputers (PC) nach dessen Einschalten die für eine Bilddarstellung benötigten Signale für alle Auflösungen und Video-Modis entsprechend entweder mit fernsehgerätgerechter oder mit monitorgerechter Bildwechsel- und Zeilenfrequenz unter Einbeziehung eines jeweils entsprechend zugehörigen Interlaced- oder Noninterlaced-Modus über die VGA-Schnittstelle (VGA) des Personalcomputers (PC) ausgibt.

2. Personalcomputer-System nach Anspruch 1, **dadurch gekennzeichnet,** daß an die VGA-Schnittstelle (VGA) mit einem entsprechenden VGA-Stecker (VGAST) ein Adaptergerät (AG) angeschlossen ist,
- das eine mit dem VGA-Stecker (VGAST) verbundene Fernsehgerätanschlußmöglichkeit (SCART) aufweist, an die mit einem Fernsehgerätanschluß-Kabel (SCARTK) das Fernsehgerät (TV) anschließbar ist,
- das eine mit dem VGA-Stecker (VGAST) verbundene Monitoranschlußmöglichkeit (MTR) aufweist, über die mit einem Monitor-Kabel (MK) der Monitor (M) anschließbar ist,
- das eine Tastaturverbindungsleitung aufweist, die mit der am Personalcomputer (PC) vorgesehenen Anschlußmöglichkeit (T1) für die Tastatur (TA) verbunden ist,
- das eine Anschlußmöglichkeit (T2) für eine Tastatur (TA) aufweist, in die die Tastatur (TA) eingesteckt ist,
- das eine Durchschaltung zwischen Tastaturverbindungsleitung und Anschlußmöglichkeit (T2) für die Tastatur (TA) mit einer Abzweigung (VSL) des die Versorgungsspannung führenden Pins auf die Fernsehgerätanschlußmöglichkeit (SCART) aufweist, und
- das eine Logikschaltung (LUV) zur Zusammenführung an der Fernsehgerätanschlußmöglichkeit (SCART) der von der VGA-Schnittstelle (VGA) getrennt zugeführten Signale für eine Horizontal (HSYNC)- und eine Vertikalsynchronisation (VSYNC) zu einem gemeinsamen Kompositionssignal (CSYNC) aufweist.

3. Personalcomputer-System nach Anspruch 1 oder 2, **dadurch gekennzeichnet,** daß ein erstes externes Speichermedium (TVD) für einem Fernsehgerät (TV) und ein zweites externes Speichermedium (MD) für einem Monitor (M) zugeordnete Initialisierungsanweisungen vorgesehen ist, die wahlweise und bei Bedarf in das Laufwerk (LW) des Personalcomputers (PC) beim Booten eingelegt sind.

4. Personalcomputer-System nach einem der vorherigen Ansprüche, **dadurch gekennzeichnet,** daß die Fernsehgerätanschlußmöglichkeit (SCART) des Adaptergerätes (AG) als Scart-Schnittstelle ausgebildet ist.

5. Personalcomputer-System nach einem der vorherigen Ansprüche, **dadurch gekennzeichnet,** daß ein Auswahl-Icon für die Auswahl des Bildwiedergabegerätes in einer Bilddarstellung mit dem Cursor aktivierbar ist, das nach erfolgter Auswahl den Personalcomputer (PC) in einen heruntergefahrenen Zustand bringt, in dem ein Wechsel des Bildwiedergabegerätes möglich und nach dem Einschalten des Personalcomputers (PC) ein entsprechendes Booten möglich ist.

6. Personalcomputer-System nach einem der vorherigen Ansprüche, **dadurch gekennzeichnet,** daß zum Betreiben eines Fernsehgerätes (TV) eine Farbanpassung vorgenommen ist.
